# EUROPÄISCHE PATENTSCHRIFT

(11) **EP 3 541 678 B1**
(45) Veröffentlichungstag und Bekanntmachung des Hinweises auf die Patenterteilung: **07.07.2021**
(21) Anmeldenummer: 17790673.2
(22) Anmeldetag: 18.10.2017
(51) Int. Cl.: B61D 19/02

(54) **TÜRMODUL ZUR ANORDNUNG IN EINER TÜRÖFFNUNG EINES WAGENKASTENS EINES FAHRZEUGS**
DOOR MODULE FOR ARRANGING IN A DOOR OPENING OF A WAGON BODY OF A VEHICLE
MODULE DE PORTE À MONTER DANS UNE OUVERTURE DE PORTE D'UNE CAISSE DE VÉHICULE

(30) Priorität: 21.11.2016 DE 102016013797
(43) Veröffentlichungstag der Anmeldung: 25.09.2019
(73) Patentinhaber: Knorr-Bremse Gesellschaft mit beschränkter Haftung, 2340 Mödling (AT)
(72) Erfinder: HÖRLENDSBERGER, Christian, 3340 Waidhofen/Ybbs (AT); MAIR, Andreas, 4372 Hendorf (AT); ALLMER, Christian, 3264 Gresten (AT)
(74) Vertreter: Wiedemann, Markus
(86) Internationale Anmeldenummer: PCT/EP2017/001227
(87) Internationale Veröffentlichungsnummer: WO 2018/091123

(56) Entgegenhaltungen:
- EP-A1- 2 883 728
- DE-C1- 19 701 681
- DE-U1- 20 311 653
- DE-U1-202004 007 407
- DE-U1-202007 008 489
- DE-U1-202008 004 518

## Beschreibung

Die Erfindung geht aus von einem Türmodul zur Anordnung in einer Türöffnung einer Wand eines Wagenkastens eines Fahrzeugs, insbesondere eines Schienenfahrzeugs, gemäß dem Oberbegriff von Anspruch 1. Weiterhin betrifft die Erfindung auch einen Wagenkasten für ein Fahrzeug gemäß Anspruch 9 sowie ein Fahrzeug gemäß Anspruch 10.

Bei einem solchen Türmodul ergibt sich das Problem, dass der Türflügel im Fahrbetrieb Belastungen ausgesetzt ist, welche beispielsweise Druckunterschiede sind, wenn das Fahrzeug in einen Tunnel einfährt oder aber auch wenn Fahrzeugbegegnungen stattfinden. Auch können gegen den Türflügel lehnende oder fallende Passagiere Belastungen auf den Türflügel ausüben.

Nicht immer kann aufgrund der Höhe der Belastungen und aufgrund der Form- oder Materialsteifigkeit des Türflügels verhindert werden, dass sich der Türflügel vor allem bei einer mittigen Belastung vertikal zwischen den beiden oberen und unteren Führungen nach außen hin durchbiegt. Dadurch kann zum einen die Dichtwirkung des Dichtelements aufgehoben werden, weil dieses infolge der Durchbiegung des Türblatts von seiner gegenüberliegenden Dichtfläche abhebt. Dann kann es zu Komfortverlusten infolge von Geräuschen aber auch zu Schäden durch eindringende Medien wie Wasser kommen.

Zum andern kann die Verformung des Türflügels bei Belastung von innen derart groß werden, dass der Türflügel im Fahrbetrieb außerhalb der zulässigen dynamischen Umgrenzungslinie (Lichtraumprofil) liegt und es dadurch sogar zu einer Kollision mit einer Tunnelwand oder einem entgegenkommenden Fahrzeug kommen kann.

Ein gattungsgemäßes Türmodul ist beispielsweise aus DE 197 01 681 C1 bekannt. Dort ist jeweils ein elastisch verformbares Dichtungselement an einer Stirnfläche des Türrahmens des Türflügels sowie an einem Rahmenprofil eines Türportals angeordnet. Die Dichtung an dem Türflügel hat eine Hohlkammer, welche in der Öffnungsposition der Türe entlüftet und in der Schließposition der Türe elektronisch gesteuert belüftet wird, damit eine die Hohlkammer begrenzende Dichtfläche konvex vorspringt und in eine Ausnehmung des an dem Rahmenprofil des Türportals angeordneten Dichtungselements eingreifen kann.

Der vorliegenden Erfindung liegt die Aufgabe zugrunde, ein Türmodul der eingangserwähnten Art derart weiter zu bilden, dass auf einfache Weise die oben beschriebenen Probleme vermieden werden. Gleichfalls soll auch ein Wagenkasten mit einem solchen Türmodul sowie ein Fahrzeug mit einem solchen Wagenkasten zur Verfügung gestellt werden.

Diese Aufgabe wird erfindungsgemäß durch die Merkmale des unabhängigen Anspruchs 1 gelöst. Vorteilhafte Weiterbildungen der Erfindung sind Gegenstand der beigefügten Unteransprüche.

### Offenbarung der Erfindung

Die Erfindung geht aus von einem Türmodul zur Anordnung in einer Öffnung einer Wand eines Wagenkastens eines Fahrzeugs, insbesondere eines Schienenfahrzeugs aus. Ein solches Türmodul kann daher in die Öffnung des Wagenkastens eingesetzt werden, um die Öffnung zu verschließen und sie mittels des manuell oder motorisch antreibbaren Türflügels bedarfsweise zu öffnen.

Im Einzelnen geht die Erfindung aus von einem Türmodul zur Anordnung in einer Türöffnung einer Wand eines Wagenkastens eines Fahrzeugs, mit
a) wenigstens einem Türflügel,
b) einem Türportal, welches zwei vertikal angeordnete Holme und zwei horizontal angeordnete Holme umfasst, wobei der Türflügel relativ zum Türportal zwischen einer Offenposition und einer Schließposition bewegbar ist, und
c) wenigstens einem elastisch verformbaren Dichtungselement, welches in der Schließposition wenigstens einen vertikalen Rand des Türflügels gegenüber einem ersten vertikal angeordneten Holm des Türportals dichtet, und mit
d) einer elektronischen Türsteuerung, welche zum Verriegeln/Entriegeln oder Blockieren/Freigeben des Türflügels (40) gegenüber dem Türportal vorgesehen ist, wobei
e) wenigstens ein an dem vertikalen Rand des Türflügels angeordnetes erstes Formelement und wenigstens ein zweites, am ersten vertikalen Holm des Türportals angeordnetes Formelement vorgesehen sind, wobei
f) das wenigstens eine elastisch verformbare Dichtungselement separat von dem ersten Formelement und dem zweiten Formelement ausgebildet ist.

Antreibbare Türflügel schließen neben durch Fremdkraft wie z.B. einen Motor angetriebene Türflügel auch Türflügel ein, welche händisch durch einen Fahrer oder Fahrgast angetrieben oder bedient werden.

Das Türmodul kann Außen-Schiebetüren, bei welchen eine Bewegung des Türflügels oder Türblatts parallel zu Außenfläche des Wagens außen erfolgt, Taschen-Schiebetüren, bei welchen eine Bewegung des Türflügels oder Türblatts parallel zu Außenfläche des Wagens in einer Türtasche erfolgt, sowie Schwenkschiebetüren umfassen, bei welchen eine Bewegung zunächst gleichzeitig senkrecht und parallel und anschließend lediglich parallel zur Außenfläche des Wagens innen/außen erfolgt.

Unter einem Schienenfahrzeug ist ein spurgebundenes Fahrzeug zu verstehen, wie eine Lokomotive, ein Triebzug, ein Treibwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug. Alternativ kann das Türmodul für jede andere Art von Fahrzeug eingesetzt werden, beispielsweise auch für Omnibusse.

Die Erfindung ist dadurch gekennzeichnet, dass
g) lediglich in der Schließposition des Türflügels das erste Formelement und das zweite Formelement automatisch derart ineinander greifen, dass zwischen dem ersten Formelement und dem zweiten Formelement in einer Richtung senkrecht zur Ebene des Türflügels gesehen ein indirekter Formschluss automatisch hergestellt wird, aber ein solcher indirekter Formschluss in einer von der Schließposition abweichenden Position des wenigstens einen Türflügels automatisch aufgehoben ist oder wird, wobei
h) das automatische Zustandekommen und Aufheben des indirekten Formschlusses ausschließlich mechanisch erfolgt und durch die Bewegung des Türflügels in Schließ- oder Öffnungsrichtung gesteuert und separat und unabhängig von der elektronischen Türsteuerung ist, wobei
i) das erste Formelement oder das zweite Formelement das wenigstens eine elastisch verformbare Dichtungselement derart tragen, dass beim Zustandekommen des indirekten Formschlusses in der Schließposition das wenigstens eine elastisch verformbare Dichtungselement einen Bestandteil des indirekten Formschlusses dadurch ausbildet, dass
   - das von dem ersten Formelement getragene elastisch verformbare Dichtungselement und das zweite Formelement formschlüssig ineinandergreifen, oder
   - das von dem zweiten Formelement getragene elastisch verformbare Dichtungselement und das erste Formelement formschlüssig ineinandergreifen, und wobei
j) komplementär ausgebildete erste und zweite Keilflächen an dem ersten Formelement und an dem zweiten Formelement derart angeordnet sind, dass die Wirkung des indirekten Formschlusses und/oder die Dichtwirkung bei einer Bewegung des Türflügels ausgehend von einer Position des Türflügels, in welcher dieser die Schließposition noch nicht vollständig eingenommen hat, in Richtung auf eine Endstellung der Schließposition zunimmt.

Das durch die Bewegung des Türflügels in Schließ- oder Öffnungsrichtung gesteuerte automatische Zustandekommen und Aufheben des Formschlusses ist ausschließlich mechanisch und insbesondere separat und unabhängig von der elektronischen Türsteuerung, welche zum Verriegeln/Entriegeln oder Blockieren/Freigeben des wenigstens einen Türflügels am Türportal vorgesehen ist. Solche elektronischen Türsteuerungen steuern einen Türantrieb wie einen pneumatischen Türantrieb, einen elektromotorischen Türantrieb oder eine Kombination aus beiden sowie auch eine Türblockierung sowie Sicherheitsfunktionen wie Hinderniserkennung.

Unter einem indirekten Formschluss soll dagegen ein Formschluss verstanden werden, bei welchem zwischen dem ersten Formelement und dem zweiten Formelement noch wenigstens ein weiteres Element, nämlich das wenigstens eine elastisch verformbare Dichtungselement angeordnet ist.

Ineinandergreifen des ersten Formelements und des zweiten Formelements bedeutet, dass beispielsweise eines der Formelemente einen Vorsprung oder einen vorstehenden Abschnitt aufweist, welcher in eine Öffnung des anderen Formelements eingreift oder einen hinterschnittenen Querschnitt des anderen Formelements hintergreift, um so den Formschluss herbeizuführen.

Formschluss in einer Richtung senkrecht zur Ebene des Türflügels gesehen bedeutet, dass die Richtung des Formschlusses nicht ausschließlich senkrecht zur Ebene des Türflügels ausgerichtet sein muss. Es reicht, wenn lediglich ein vektorieller Anteil des auch schräg zur Ebene des Türflügels ausgerichteten Formschlusses senkrecht zur Ebene des Türflügels angeordnet ist, um in der Schließposition eine Bewegung des Türflügels senkrecht zu seiner Ebene zu verhindern.

Kein solcher Formschluss ist dagegen in einer von der Schließposition abweichenden Position vorhanden bzw. ein solcher Formschluss wird automatisch aufgehoben, welche beispielsweise die Öffnungsposition oder eine Position zwischen der Öffnungsposition und der Schließposition des Türflügels eingenommen wird. Das automatische Zustandekommen des Formschlusses lediglich in der Schließposition schließt aber auch Positionen des Türflügels ein, wie sie sich kurz vor Erreichen einer finalen Endstellung der Schließposition einstellen und in denen der Formschluss bereits wenigstens teilweise ausgebildet ist, bevor nach einem weiteren Bewegen des Türflügels in die finale Endstellung der Schließposition der Formschluss dann vollständig ausgebildet wird. In der finalen Endstellung liegt beispielsweise der intensivste Kontakt oder die größte Flächenpressung zwischen den beiden Formelementen vor.

Die Dichtwirkung infolge eines Zusammenwirkens des elastisch verformbaren Dichtelements mit dem jeweils zugeordneten Partner wie beispielsweise einem Formelement kommt bevorzugt lediglich oder erst beim Einnehmen der Schließposition des Türflügels zustande.

Der Vorteil dieser erfindungsgemäßen Maßnahmen liegt darin, dass der Türflügel durch den indirekten Formschluss zwischen dem ersten Formelement und dem zweiten Formelement an dem Türportal in einer Richtung senkrecht zur Ebene des Türflügels fixiert wird und daher belastungsbedingte Verformungen in einer Richtung senkrecht zur Ebene des Türflügels reduziert werden. Dies wirkt sich auch positiv auf die Dichtwirkung des elastisch verformbaren Dichtungselements aus, welches dann, entweder am vertikalen Holm des Türportals oder am vertikalen Rand des Türflügels angeordnet, weniger Bewegung ausgesetzt ist, welche es außer Kontakt mit dem vertikalen Rand des Türflügels oder mit dem vertikalen Holm des Türportals bringen und damit die Dichtwirkung reduzieren oder aufheben könnte. Dann werden Komfortverluste infolge von Geräuschen aber auch Schäden durch eindringende Medien wie Wasser vermieden.

Das wenigstens eine elastisch verformbare Dichtungselement kann einteilig oder mehrteilig ausgeführt sein und nur entlang des ersten vertikalen Holms des Türportals oder des vertikalen Randes des wenigstens einen Türflügels oder aber auch teilweise oder vollständig umlaufend vorgesehen sein. Stellenweise kann es auch unterbrochen sein.

Da das wenigstens eine elastisch verformbare Dichtungselement separat von dem ersten Formelement und dem zweiten Formelement ausgebildet ist, wird die Funktion des Formschlusses von den beiden Formelementen und die Dichtfunktion von dem wenigstens einen elastisch verformbaren Dichtungselement übernommen. Der indirekte Formschluss sorgt dann, wie oben bereits erläutert, für eine annähernd belastungsunabhängige Aufrechterhaltung der Dichtfunktion in Richtung senkrecht zur Ebene des Türflügels.

Weiterhin erfindungsgemäß tragen das erste Formelement oder das zweite Formelement das wenigstens eine elastisch verformbare Dichtungselement derart, dass beim Zustandekommen des Formschlusses in der Schließposition das wenigstens eine elastisch verformbare Dichtungselement einen Bestandteil des Formschlusses dadurch ausbildet, dass
a) das von dem ersten Formelement getragene elastisch verformbare Dichtungselement und das zweite Formelement formschlüssig ineinander greifen, oder
b) das von dem zweiten Formelement getragene elastisch verformbare Dichtungselement und das erste Formelement formschlüssig ineinander greifen.

Dann wird, wie oben bereits beschrieben ein indirekter Formschluss ausgebildet. Dies bietet auch den Vorteil, dass bedingt durch die Zwischenordnung des wenigstens einen elastisch verformbare Dichtungselements zwischen das erste und zweite Formelement Schwingungen des an dem Türportal beweglich geführten Türflügels wie sie bei in Fahrt befindlichen Fahrzeugen zwangsläufig auftreten durch das wenigstens eine elastisch verformbare Dichtungselement gedämpft werden und dadurch weniger zur Ausbildung von Körperschall führen.

Weiterhin erfindungsgemäß sind komplementär ausgebildete erste und zweite Keilflächen an dem ersten Formelement und an dem zweiten Formelement derart angeordnet, dass die Wirkung des Formschlusses und/oder die Dichtwirkung bei einer Bewegung des Türflügels ausgehend von einer Position des Türflügels, in welcher dieser die Schließposition noch nicht vollständig eingenommen hat in Richtung auf die Endstellung der Schließposition zunimmt.

Dies kann beispielsweise dadurch realisiert sein, dass das erste Formelement einen in einer horizontalen Ebene gesehen keilförmig vorspringenden Querschnitt aufweist, welcher in der Schließposition in einen keilförmig ausgenommenen Querschnitt im zweiten Formelement eingreift, wobei die Mittelachsen der keilförmigen Querschnitte senkrecht zur Ebene des Türflügels angeordnet sind. Selbstverständlich können die keilförmig vorspringen und ausgenommenen Querschnitte in Bezug auf die beiden Formelemente auch vertauscht angeordnet sein. Dann weist das zweite Formelement einen in einer horizontalen Ebene gesehen keilförmig vorspringenden Querschnitt auf, welcher in der Schließposition in einen keilförmig ausgenommenen Querschnitt im ersten Formelement eingreift, wobei die Mittelachsen der keilförmigen Querschnitte wiederum senkrecht zur Ebene des Türflügels angeordnet sind.

Dabei kann das erste Formelement oder das zweite Formelement wenigstens im Bereich des keilförmig vorspringenden Querschnitts oder im Bereich des keilförmig ausgenommenen Querschnitts das wenigstens eine elastisch verformbare Dichtungselement tragen. In diesem Fall bildet sich der bereits oben beschriebene indirekte Formschluss zwischen dem ersten und zweiten Formelement aus.

Dabei kann dieses Dichtungselement dann ebenfalls einen entsprechenden keilförmig vorspringenden Querschnitt oder keilförmig ausgenommenen Querschnitt aufweisen oder einen solchen Querschnitt auch erst beim Einnehmen der Schließposition durch den Türflügel erhalten, beispielsweise dann wenn das wenigstens eine elastisch verformbare Dichtungselement einen ummantelten Hohlbereich aufweist. Bedingt durch diesen Hohlbereich kann sich das elastisch verformbare Dichtungselements ausgehend von einer beliebigen Ausgangsgeometrie in seiner Form besser an den komplementären keilförmigen Querschnitt, des anderen Formelements anpassen, wenn der Formschluss zustande kommt.

Durch den keilförmigen Querschnitt des elastisch verformbaren Dichtungselements wird dieses elastisch komprimiert, wenn die Schließposition eingenommen wird. Dadurch verstärkt sich die Dichtwirkung bei einer Bewegung des Türflügels in Richtung Schließposition in vorteilhafter Weise.

Durch die in den Unteransprüchen aufgeführten Maßnahmen sind vorteilhafte Weiterbildungen und Verbesserungen der Erfindung möglich.

### Beispielsweise kann

a) das wenigstens eine erste Formelement an einer in Bezug zum Wagenkasten nach Innen weisenden Türfläche des Türflügels und das zweite Formelement an einer in Bezug zum Wagenkasten gesehen nach Außen weisenden Holmfläche des vertikalen Holms des Türportals angeordnet sein, oder
b) das wenigstens eine erste Formelement kann an einer in Bezug zum Wagenkasten nach Außen weisenden Türfläche des Türflügels und das zweite Formelement an einer in Bezug zum Wagenkasten nach Innen weisenden Holmfläche des vertikalen Holms des Türportals angeordnet sein.

Das wenigstens eine elastisch verformbare Dichtungselement kann auch einen ummantelten Hohlbereich aufweisen.

Gemäß einer Ausführungsform können das wenigstens eine erste Formelement und das wenigstens eine zweite Formelement und/oder das wenigstens eine elastisch verformbare Dichtungselement koplanar in Bezug zur Ebene des Türflügels angeordnet sein. Dies kann beispielsweise dadurch realisiert sein, dass das wenigstens eine erste Formelement und das wenigstens eine zweite Formelement und/oder das wenigstens eine elastisch verformbare Dichtungselement an gegenüberliegenden Stirnflächen am vertikalen Holm des Türportals und am vertikalen Rand des Türflügels angeordnet sind, wobei die Flächennormalen dieser Stirnfläche beispielsweise in die Bewegungsrichtung des Türflügels beim Öffnen und Schließen weisen. Dann ergibt sich ein relativ schmaler Querschnitt des Türflügels.

Alternativ können das wenigstens eine wenigstens eine erste Formelement und das wenigstens eine zweite Formelement und/oder das wenigstens eine Dichtungselement in Bezug zur Ebene des Türflügels nach Außen oder Innen versetzt angeordnet sein. Dies kann beispielsweise dadurch realisiert sein, dass das wenigstens eine erste Formelement und/oder das wenigstens eine zweite Formelement von Profilleisten getragen oder von diesen gebildet werden, welche an dem vertikalen Rand des Türportals und/oder an dem ersten vertikalen Holm des Türportals befestigt sind und von denen dann beispielsweise ein in Bezug zur Ebene des Türflügels nach Außen oder Innen ragender Schenkel das wenigstens eine Dichtungselement trägt.

In Bezug auf die vertikale Anordnung und Erstreckung der Formelemente kann beispielsweise vorgesehen sein, dass
a) in Bezug zu dem vertikalen Rand des Türflügels das erste Formelement und in Bezug zu dem ersten vertikalen Holm des Türportals das zweite Formelement jeweils etwa mittig angeordnet sind, oder dass
b) in Bezug zu dem vertikalen Rand des Türflügels das erste Formelement und in Bezug zu dem ersten vertikalen Holm des Türportals das zweite Formelement jeweils entlang der gesamten vertikalen Erstreckung des vertikalen Rands des Türflügels und des ersten vertikalen Holms des Türportals angeordnet sind, oder dass
c) in Bezug zu dem vertikalen Rand des Türflügels mehrere erste Formelemente und in Bezug zu dem ersten vertikalen Holm des Türportals mehrere zweite Formelemente jeweils mit Vertikalabstand zueinander angeordnet sind.

Besonders bevorzugt führt der Türflügel gegenüber dem Türportal eine kombinierte Ausstell- und Verschiebebewegung (Schwenkschiebetür) oder lediglich eine lineare Verschiebebewegung (Schiebetür) aus. Die Erfindung eignet sich daher sowohl für gegenüber dem Türportal rein linear bewegte Türflügel als auch für Türflügel, welche gegenüber dem Portal eine kombinierte Verschiebe- und Ausstellbewegung ausführen.

Ebenso betrifft die Erfindung auch Türmodule mit zwei Türflügeln, wobei dann bevorzugt an den beiden vertikalen Holmen des Türportals sowie an den gegenüber liegenden vertikalen Rändern beider Türflügeln jeweils erste und zweite Formelemente angeordnet sind sowie je einer Paarung eines vertikalen Randes eines Türflügels und einem vertikal angeordneter Holm des Türportals wenigstens ein elastisch verformbares Dichtungselement zugeordnet ist.

Die Erfindung betrifft auch einen Wagenkasten für ein Fahrzeug, insbesondere für ein Schienenfahrzeug, mit wenigstens einer Wand mit einer Öffnung, in welcher ein oben beschriebenes Türmodul angeordnet ist, sowie ein Fahrzeug, insbesondere ein Schienenfahrzeug mit wenigstens einem solchen Wagenkasten.

### Zeichnung

Die Erfindung wird nachstehend anhand von Ausführungsbeispielen unter Bezugnahme auf die beigefügte Zeichnung näher beschrieben. Es zeigen:
- Fig.1: eine Seitenansicht eines Schienenfahrzeugs mit Türmoduln gemäß der Erfindung;
- Fig.2: eine Vorderansicht eines Türmoduls gemäß der Erfindung;
- Fig.3A: einen Horizontalschnitt durch einen Ausschnitt gemäß einer Ausführungsform eines erfindungsgemäßen Türmoduls kurz vor Erreichen der Schließposition des Türflügels;
- Fig.3B: den Türflügel von Fig.3A in seiner finalen Schließposition;
- Fig.4A: einen Horizontalschnitt durch einen Ausschnitt einer nicht erfindungsgemäßen Ausführungsform eines Türmoduls vor Erreichen der Schließposition des Türflügels;
- Fig.4B: den Türflügel von Fig.4A in seiner finalen Schließposition;
- Fig.5: einen Horizontalschnitt durch einen Ausschnitt einer nicht erfindungsgemäßen Ausführungsform eines Türmoduls in der finalen Schließposition des Türflügels;
- Fig.6: einen Horizontalschnitt durch einen Ausschnitt einer nicht erfindungsgemäßen Ausführungsform eines Türmoduls in der finalen Schließposition des Türflügels;
- Fig.7: einen Horizontalschnitt durch einen Ausschnitt eines Türmoduls gemäß einer nicht erfindungsgemäßen Ausführungsform in der finalen Schließposition des Türflügels;
- Fig.8: eine perspektivische Ansicht eines Ausschnitts eines Türmoduls gemäß einer nicht erfindungsgemäßen Ausführungsform in der finalen Schließposition des Türflügels;
- Fig.9: einen Horizontalschnitt durch einen Ausschnitt einer nicht erfindungsgemäßen Ausführungsform eines Türmoduls in der finalen Schließposition des Türflügels;
- Fig.10: einen Horizontalschnitt durch einen Ausschnitt einer weiteren erfindungsgemäßen Ausführungsform eines Türmoduls in der finalen Schließposition des Türflügels;
- Fig.11: einen Horizontalschnitt durch einen Ausschnitt einer weiteren Ausführungsform eines erfindungsgemäßen Türmoduls in der finalen Schließposition des Türflügels.

### Beschreibung der Ausführungsbeispiele

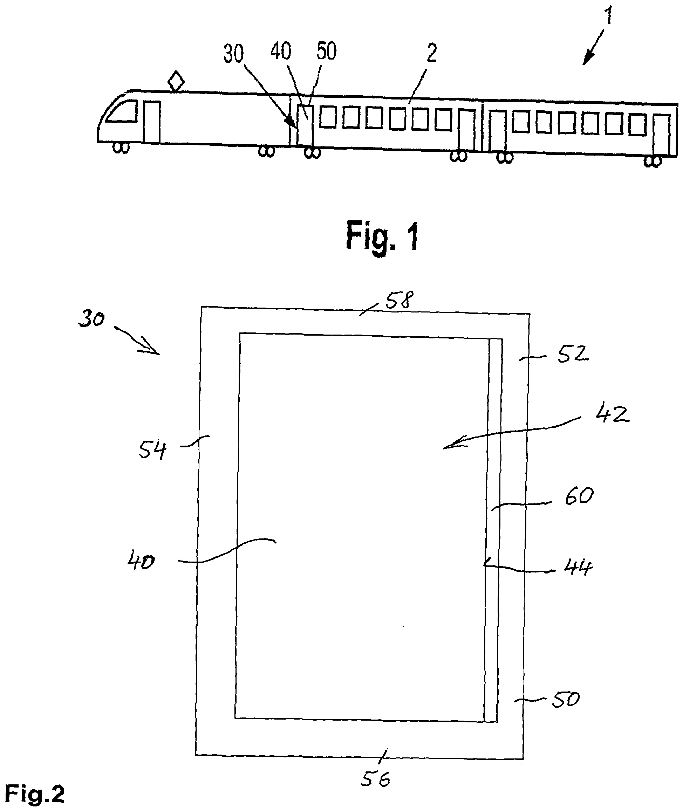

Die in **Fig.1** gezeigte bevorzugte Ausführungsform eines Fahrzeugs 1 mit einem Türmodul gemäß der Erfindung ist ein Schienenfahrzeug mit einer Lokomotive und mehreren Wagen, wobei grundlegende Bauteile am Beispiel des ersten Wagens erläutert werden. Diese Bauteile sind aber auch an der Lokomotive und an den weiteren Wagen zu finden.

Der Wagen umfasst eine Außenwand 2 und mehrere Türmodule 30, welche jeweils einen Türflügel 40, ein Türportal 50 und ein elastisch verformbares Dichtungselement 60 als Türdichtung umfassen.

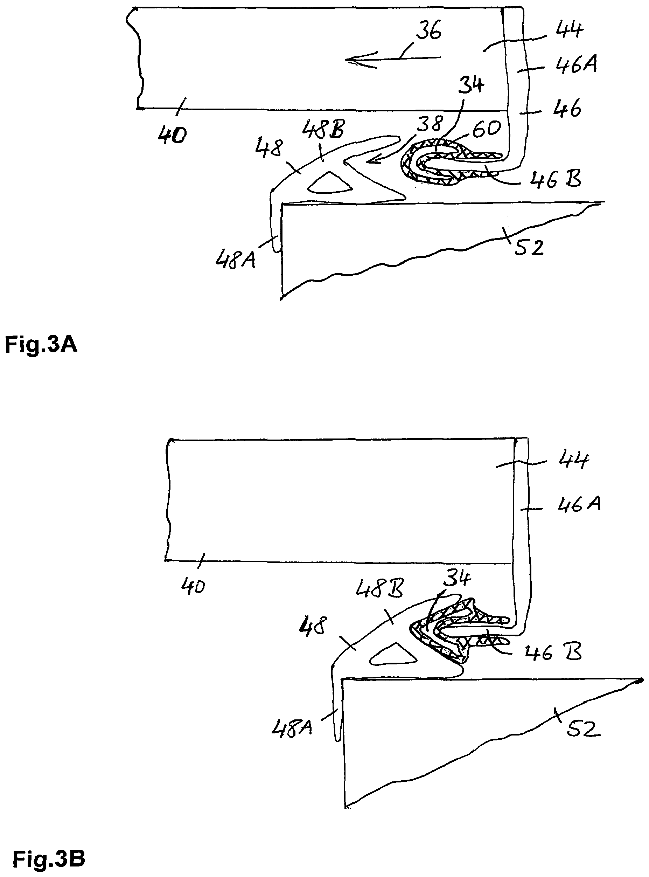

Gemäß **Fig.2** umfasst das Türportal 50 zwei vertikal angeordnete Holme 52, 54 und zwei horizontal angeordnete Holme 56, 58, wobei der Türflügel 40 relativ zum Türportal 50 zwischen einer Offenposition und einer Schließposition hier beispielsweise durch eine elektronische Türsteuerung motorisch angetrieben wird, um eine Türöffnung 42 zum Ein- und Aussteigen von Fahrgästen im Stillstand zu öffnen bzw. zur Fahrt zu verschließen. Bei der Ausführungsform von **Fig.3a** und **Fig.3b** führt der Türflügel 40 gegenüber dem Türportal 50 beispielsweise eine rein lineare Verschiebebewegung aus. Das elastisch verformbare Dichtungselement 60 und hier beispielsweise an den Holmen 52 bis 58 des Türportals 50 umlaufend angeordnete Dichtungselement 60 dichtet dann in der Schließposition den Türflügel 40 gegenüber dem Türportal 50 ab.

Generell sind wenigstens ein erstes, an einem vertikalen Rand 44 des Türflügels 40 angeordnetes Formelement 46 und wenigstens ein zweites, an dem diesem vertikalen Rand 44 gegenüber liegenden vertikalen 52 Holm des Türportals 50 angeordnetes Formelement 48 vorgesehen.

Bei der Ausführungsform von **Fig.3A** und **Fig.3B** besteht das erste Formelement 46 in einer vertikalen Profileiste, von welcher ein erster Schenkel 46A an der Stirnfläche des vertikalen Rands 44 des Türflügels 40 und ein zweiter, senkrecht zur Türöffnung 42 hin abgekanteter Schenkel 46B das elastisch verformbare Dichtungselement 60 trägt. Das zweite Formelement 48 besteht ebenfalls aus einer vertikalen Leiste, welche mit einem ersten Schenkel 48A an der Stirnfläche des vertikalen Holms 52 befestigt und an einem zweiten Schenkel 48B eine Ausnehmung 38 mit keilförmigem Querschnitt aufweist, wobei eine Mittelachse des keilförmigen Querschnitts parallel zur der in **Fig.3A** durch einen Pfeil 36 symbolisierten Bewegungsrichtung des Türflügels 40 ist. Das elastisch verformbare Dichtelement 60 weist einen ummantelten Hohlbereich 34 auf, welcher unverformt einen etwa ovalförmigen Querschnitt aufweist. Die Ausnehmung 38 mit keilförmigem Querschnitt im zweiten Formelement 48 fluchtet mit dem elastisch verformbaren, vom ersten Formelement 46 getragenen Dichtelement 60.

Bezogen auf den Innenraum des Wagenkastens ist das erste Formelement 46 an dem Türflügel 40 innen und das zweite Formelement 48 an dem vertikalen Holm 52 des Türportals 50 außen angeordnet. **Fig.3A** stellt eine Position des Türflügels 40 kurz vor Erreichen der finalen Endposition der Schließposition und **Fig.3B** schließlich die finale Schließposition dar. Die Richtung des Pfeils 36 in **Fig.3A** weist auf die Bewegungsrichtung des Türflügels 40 von der Öffnungsstellung in die Schließposition hin.

In der in **Fig.3B** gezeigten Schließposition des Türflügels 40 greifen das erste Formelement 46 und das zweite Formelement 48 derart ineinander, dass zwischen dem ersten Formelement 46 und dem zweiten Formelement 48 in einer Richtung senkrecht zur Ebene des Türflügels 40 oder senkrecht zur Fahrtrichtung des Schienenfahrzeugs 1 gesehen ein Formschluss zustande kommt. Wie anhand von **Fig.3A** und **Fig.3B** leicht vorstellbar ist, kommt in den von der Schließposition abweichenden Positionen des Türflügels 40 kein solcher Formschluss zustande. Der hier beispielsweise indirekte Formschluss zwischen den beiden Formelementen 46, 48 kommt dadurch zustande, dass beim Einnehmen der Schließposition das von dem ersten Formelement 46 getragene elastisch verformbare Dichtelement 60 fluchtend in die im zweiten Formelement 48 ausgebildete keilförmige Ausnehmung 38 eintaucht und sich aufgrund der Kompressibilität des Hohlbereichs 34 in seinem Querschnitt an den keilförmigen Querschnitt der Ausnehmung 38 anpasst. Der Formschluss zwischen dem ersten Formelement 46 und dem zweiten Formelement 48 ist hier bevorzugt indirekt, weil das elastisch verformbare Dichtungselement 60 zwischengeordnet ist und dadurch neben den beiden Formelementen 46, 48 ebenfalls an dem Formschluss teilhat. Weiterhin wird dann auch die durch das Dichtungselement 60 hervorgerufene Dichtwirkung beim Einnehmen der Schließposition durch den Türflügel 40 im Sinne einer Selbstverstärkung erhöht.

In den nachfolgend beschriebenen Ausführungsformen sind gleichartige und gleich wirkende Bauteile und Baugruppen durch die gleichen Bezugszeichen bezeichnet.

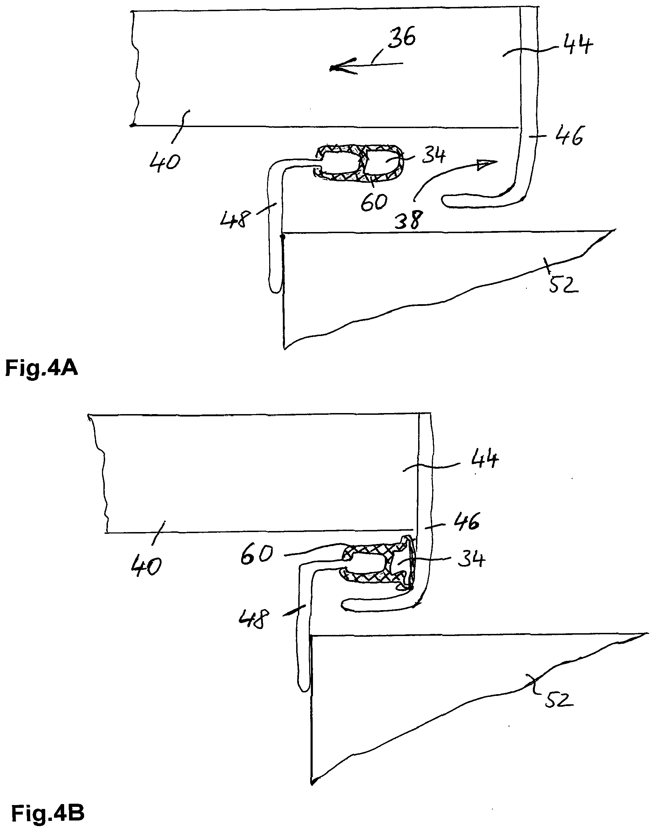

Bei der Ausführungsform von **Fig.4A** und **Fig.4B** wird im Unterschied zur Ausführungsform von **Fig.3A** und **Fig.3B** das elastisch verformbare Dichtungselement 60 von dem zweiten, am vertikalen Holm 52 des Türportals 50 angeordneten Formelement 48 getragen. Weiterhin ist der Querschnitt der Ausnehmung 38 des ersten, vom vertikalen Rand 44 des Türflügels 40 getragenen Formelements 46 hier nicht keilförmig, sondern eher becherförmig, so dass sich das freie Ende des Querschnitts des Dichtungselements 60 aufgrund des Hohlbereichs 34 beim Kontakt mit dem Boden der Ausnehmung 38 seitlich erweitert **(****Fig.4B****)** und auf diese Weise den Formschluss senkrecht zur Ebene des Türportals 50 ausbildet.

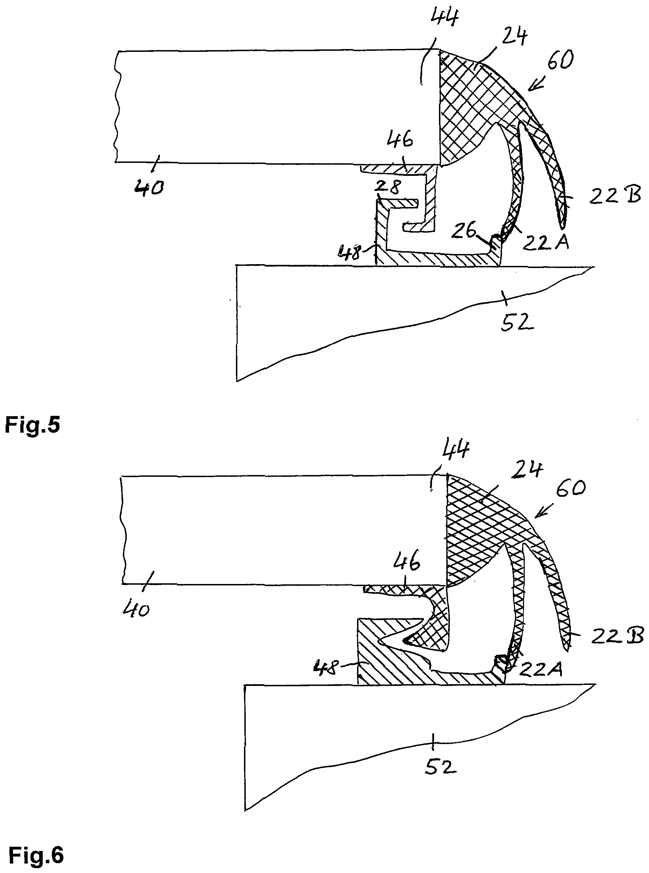

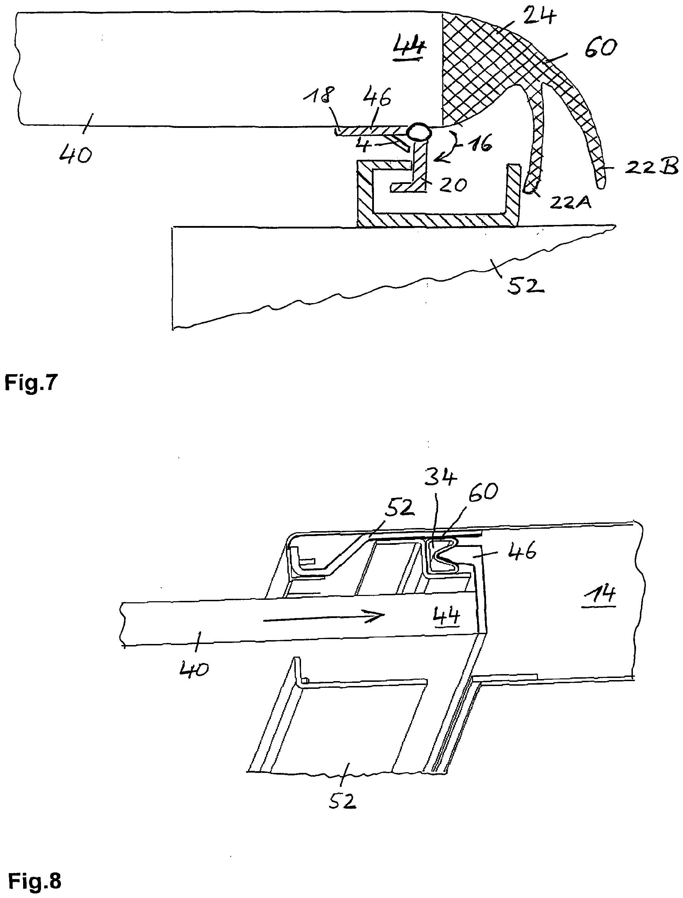

Bei den Ausführungsformen von **Fig.5** und **Fig.7** sind die beiden den Formschluss herbei führenden Formelemente 46, 48 getrennt und separat von dem elastisch verformbaren Dichtungselement 60 ausgeführt. Außerdem führt dort der Türflügel 40 keine reine Linearbewegung mehr aus, um die Schließposition einzunehmen sondern eine kombinierte Schwenk- und Verschiebebewegung, wie durch den Pfeil 32 angedeutet ist.

In **Fig.5** sind das erste und das zweite Formelement 46, 48 beispielsweise als im Querschnitt komplementär hakenförmig ausgebildete Profilleisten, wobei beispielsweise das zweite Formelement 48 einen U-förmigen Querschnitt aufweist und ein erster Schenkel 28 dieses U-Profils als Haken zum Formschluss ausgeführt und der zweite Schenkel 26 des U-Profils als Anschlag für das elastisch verformbare Dichtungselement 60 in der Schließposition dient. Das elastisch verformbare Dichtungselement 60 weist hier beispielsweise zwei von einer an der Stirnfläche des Rands 44 des Türflügels 40 angeordneten Basis 24 zum vertikalen Holm 52 des Türportals 50 nach innen weg ragende Dichtlippen 22A, 22B auf. Von den beiden Dichtlippen 22A, 22B übernimmt dann eine Dichtlippe 22A die Dichtfunktion durch Kontakt mit dem zweiten Schenkel 26 des zweiten Formelements 48 in der Schließposition.

Bei der Ausführungsform von **Fig.6** sind das erste Formelement 46 und das zweite Formelement 48 wiederum als komplementär ausgebildete Keilquerschnitte ausgeführt. Bevorzugt wird als Formelement 46, 48 hier jeweils eine Profilleiste aus einem Elastomer mit einer Shore-Härte von ca. 100 Shore verwendet.

Bei der Ausführungsform von **Fig.7** ist das erste Formelement 46 als klappbarer Haken ausgebildet, von welchem ein erster hier beispielsweise hakenförmiger Schenkel 20 federvorgespannt gegenüber einem zweiten am Rand 44 des Türflügels 40 angeordneten Schenkel 18 um eine vertikale Achse bis gegen einen Anschlag 4 klappbar ist, wie der Pfeil 16 in **Fig.7** veranschaulicht. Diese Ausführung ermöglicht einen besseren Ausgleich von Toleranzen sowie einen einfacheren Aus- und Einbau des Türflügels 40. Das Dichtungselement 60 ist wiederum wie bei den Ausführungsformen gemäß **Fig.5** und **Fig.6** gestaltet.

**Fig.8** zeigt wieder eine Ausführungsform, bei welcher der Türflügel 40 eine rein lineare Verschiebebewegung ausführt. Dort fährt der vertikale Rand 44 des Türflügels 40 aus einem Hohlraum 14 des vertikalen Holms 52 des Türportals 50 beim Einnehmen der Schließposition heraus. Der Pfeil in Fig.8 symbolisiert insofern die Bewegung on Richtung Öffnungsposition. Das erste, am vertikalen Rand 44 des Türflügels 40 angeordnete Formelement 46 ragt hier nach außen weg und trägt an seinem freien, parallel zur Ebene des Türflügels 40 angeordneten Schenkel einen keilförmigen Querschnitt. Das elastisch verformbare Dichtungselement 60 ist hier beispielsweise umlaufend an allen vier Holmen 52 bis 58 des Türportals 50 (vertikal und horizontal) angeordnet und in einer Ausnehmung 12 mit beispielsweise rechteckförmigem Querschnitt des zweiten Formelements 48 aufgenommen. Weiterhin hat das elastisch verformbare Dichtungselement 60 im unverformten Zustand, d.h. in von der Schließposition abweichenden Positionen des Türflügels 40 einen rechteckförmigen Querschnitt, welcher sich allerdings aufgrund eines innen angeordneten ummantelten Hohlbereichs 34 bei Eindrücken des keilförmigen Querschnitts des ersten Formelements 46 in der in **Fig.8** gezeigten Schließposition keilförmig anpasst und dadurch den Formschluss hervorruft.

Bei den Ausführungsformen von **Fig.3a** bis **Fig.8** überlappen sich der vertikale Rand 44 des Türflügels 40 und der vertikale Holm 52 des Türportals 50 in der Schließposition in einer Richtung senkrecht zur Ebene des Türportals 50 gesehen, wobei die beiden Formelemente 46, 48 aufeinander zuweisend angeordnet sind.

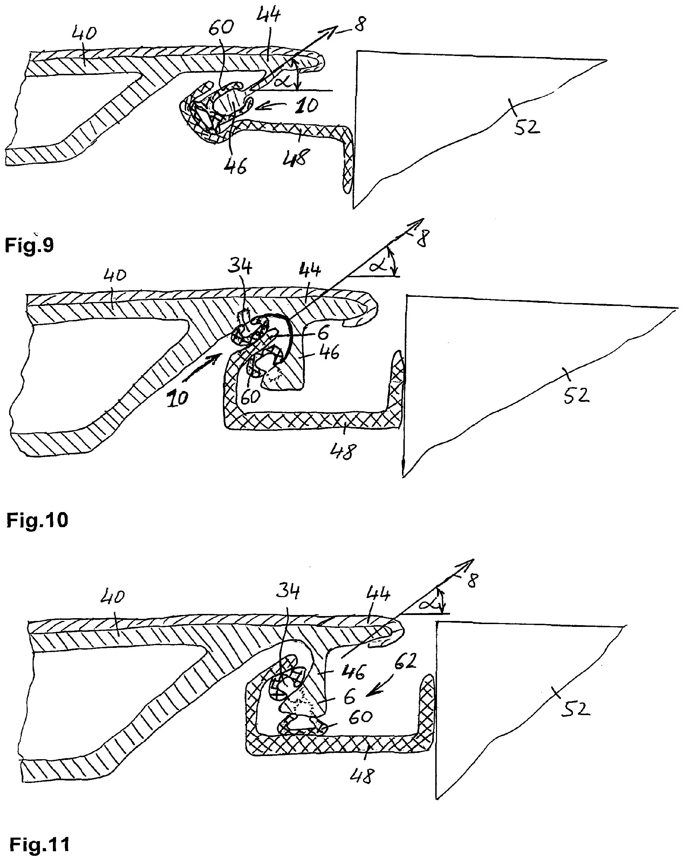

Bei den Ausführungsformen von **Fig.9** bis **Fig.11** überlappen sich der vertikale Rand 44 des Türflügels 40 und der vertikale Holm 52 des Türportals 50 in der Schließposition nicht. Jedoch ragt hier beispielsweise das zweite Formelement 48 in einer Richtung parallel zur Ebene des Türflügels 40 gesehen vom vertikalen Holm 52 weg auf den Rand 44 des Türflügels 40 zu und bildet gemäß **Fig.9** eine endseitige Ausnehmung 10 aus, deren Mittelachse etwa parallel zu der durch einen Pfeil 8 symbolisierten Bewegung des Türflügels 40 ist, welche dieser im Rahmen einer kombinierten Ausstell- und Verschiebebewegung (Schwenkschiebetür) ausführt, um von der Öffnungsposition in die Schließposition und umgekehrt zu gelangen. In diese Ausnehmung 10 greift dann in der Schließposition des Türflügels 40 gemäß **Fig.9** dann das vom ersten Formelement 46 getragene elastisch verformbare Dichtungselement 60 formschlüssig ein. Die Richtung des Formschlusses, welche hier senkrecht zu der durch den Pfeil 8 angedeuteten schrägen Ausstellbewegung des Türflügels 40 verläuft, nimmt einen spitzen Winkel a in Bezug zur Ebene des Türflügels 40 ein. Jedoch enthält dann die Richtung des Formschlusses auch eine vektorielle Komponente, welche parallel zur Ebene des Türflügels 40 ist und diesen dadurch senkrecht zur Fahrtrichtung des Schienenfahrzeugs 1 am vertikalen Holm 52 des Türportals 50 fixiert.

Bei der Ausführungsform von **Fig.10** sind die Verhältnisse in Bezug zu **Fig.9** gerade umgekehrt, wobei an dem ersten Formelement 46 die Ausnehmung 10 mit dem in ihr angeordneten Dichtungselement 60 mit ringförmig umlaufendem Hohlbereich 34 und an dem zweiten Formelement 48 ein Vorsprung 6 ausgebildet ist, der in der Schließposition in die Ausnehmung 10 eingreift oder in diese eintaucht, um den Formschluss herbeizuführen.

Die Ausführungsform von **Fig.11** ist ähnlich zu der von **Fig.9****,** wobei das am ersten Formelement 46 befestigte Dichtungselement 60 wiederum ringförmig ausgebildet ist, mit einem ringförmig umlaufenden Hohlbereich 34, wobei dann in der Schließposition das Dichtungselement 60 in einem komplementären und keilförmigen Hohlraum 62 des zweiten Formelements 48 formschlüssig aufgenommen wird.

Im Rahmen der Erfindung sind auch Ausführungen enthalten, welche beliebige Kombination von Merkmalen der hier beschriebenen Ausführungsformen enthalten.

### Bezugszeichenliste

- 1: Fahrzeug
- 2: Außenwand
- 4: Anschlag
- 6: Vorsprung
- 8: Pfeil
- 10: Ausnehmung
- 12: Ausnehmung
- 14: Hohlraum
- 16: Pfeil
- 18: zweiter Schenkel
- 20: erster Schenkel
- 22: Dichtlippen
- 24: Basis
- 26: zweiter Schenkel
- 28: erster Schenkel
- 30: Türmodul
- 32: Pfeil
- 34: Hohlbereich
- 36: Pfeil
- 38: Ausnehmung
- 40: Türflügel
- 42: Türöffnung
- 44: vertikaler Rand
- 46: erstes Formelement
- 46A: erster Schenkel
- 46B: zweiter Schenkel
- 48: zweites Formelement
- 48A: erster Schenkel
- 48B: zweiter Schenkel
- 50: Türportal
- 52: vertikaler Holm
- 54: vertikaler Holm
- 56: horizontaler Holm
- 58: horizontaler Holm
- 60: Dichtungselement
- 62: Hohlraum

## Patentansprüche

1. Türmodul (30) zur Anordnung in einer Türöffnung (42) einer Wand (2) eines Wagenkastens eines Fahrzeugs (1), mit
a) wenigstens einem Türflügel (40),
b) einem Türportal (50), welches zwei vertikal angeordnete Holme (52, 54) und zwei horizontal angeordnete Holme (56, 58) umfasst, wobei der Türflügel (40) relativ zum Türportal (50) zwischen einer Offenposition und einer Schließposition bewegbar ist, und
c) wenigstens einem elastisch verformbaren Dichtungselement (60), welches in der Schließposition wenigstens einen vertikalen Rand (44) des Türflügels (40) gegenüber einem ersten vertikal angeordneten Holm (52) des Türportals (50) dichtet, und mit
d) einer elektronischen Türsteuerung, welche zum Verriegeln/Entriegeln oder Blockieren/Freigeben des Türflügels (40) gegenüber dem Türportal (50) vorgesehen ist, wobei
e) wenigstens ein an dem vertikalen Rand (44) des Türflügels (40) angeordnetes erstes Formelement (46) und wenigstens ein zweites, am ersten vertikalen Holm (52) des Türportals (50) angeordnetes Formelement (48) vorgesehen sind, wobei
f) das wenigstens eine elastisch verformbare Dichtungselement (60) separat von dem ersten Formelement (46) und dem zweiten Formelement (48) ausgebildet ist, **dadurch gekennzeichnet, dass**
g) lediglich in der Schließposition des Türflügels (40) das erste Formelement (46) und das zweite Formelement (48) automatisch derart ineinander greifen, dass zwischen dem ersten Formelement (46) und dem zweiten Formelement (48) in einer Richtung senkrecht zur Ebene des Türflügels (40) gesehen ein indirekter Formschluss automatisch hergestellt wird, aber ein solcher indirekter Formschluss in einer von der Schließposition abweichenden Position des wenigstens einen Türflügels (40) automatisch aufgehoben ist oder wird, wobei
h) das automatische Zustandekommen und Aufheben des indirekten Formschlusses ausschließlich mechanisch erfolgt und durch die Bewegung des Türflügels (40) in Schließ- oder Öffnungsrichtung gesteuert und separat und unabhängig von der elektronischen Türsteuerung ist, wobei
i) das erste Formelement (46) oder das zweite Formelement (48) das wenigstens eine elastisch verformbare Dichtungselement (60) derart tragen, dass beim Zustandekommen des indirekten Formschlusses in der Schließposition das wenigstens eine elastisch verformbare Dichtungselement (60) einen Bestandteil des indirekten Formschlusses dadurch ausbildet, dass
- das von dem ersten Formelement (46) getragene elastisch verformbare Dichtungselement (60) und das zweite Formelement (48) formschlüssig ineinandergreifen, oder
- das von dem zweiten Formelement (48) getragene elastisch verformbare Dichtungselement (60) und das erste Formelement (46) formschlüssig ineinandergreifen, und wobei
j) komplementär ausgebildete erste und zweite Keilflächen an dem ersten Formelement (46) und an dem zweiten Formelement (48) derart angeordnet sind, dass die Wirkung des indirekten Formschlusses und/oder die Dichtwirkung bei einer Bewegung des Türflügels (40) ausgehend von einer Position des Türflügels (40), in welcher dieser die Schließposition noch nicht vollständig eingenommen hat, in Richtung auf eine Endstellung der Schließposition zunimmt.

2. Türmodul nach einem der vorhergehenden Ansprüche, **dadurch gekennzeichnet, dass**
a) das erste Formelement (46) an einer in Bezug zum Wagenkasten nach Innen weisenden Türfläche des Türflügels (40) und das zweite Formelement (48) an einer in Bezug zum Wagenkasten gesehen nach Außen weisenden Holmfläche des ersten vertikalen Holms (52) des Türportals (50) angeordnet ist, oder dass
b) das erste Formelement (46) an einer in Bezug zum Wagenkasten nach Außen weisenden Türfläche des Türflügels (40) und das zweite Formelement (48) an einer in Bezug zum Wagenkasten nach Innen weisenden Holmfläche des ersten vertikalen Holms (52) des Türportals (50) angeordnet ist.

3. Türmodul nach einem der vorhergehenden Ansprüche, **dadurch gekennzeichnet, dass** das wenigstens eine elastisch verformbare Dichtungselement (60) einen ummantelten Hohlbereich (34) aufweist.

4. Türmodul nach einem der vorhergehenden Ansprüche, **dadurch gekennzeichnet, dass** das erste Formelement (46) und das zweite Formelement (48) und/oder das wenigstens eine elastisch verformbare Dichtungselement (60) koplanar in Bezug zur Ebene des Türflügels (40) angeordnet sind.

5. Türmodul nach einem der Ansprüche 1 bis 3, **dadurch gekennzeichnet, dass** das das erste Formelement (46) und das zweite Formelement (48) und/oder das wenigstens eine elastisch verformbare Dichtungselement (60) in Bezug zur Ebene des Türflügels (40) nach Außen oder Innen versetzt angeordnet sind.

6. Türmodul nach einem der vorhergehenden Ansprüche, **dadurch gekennzeichnet, dass** in Bezug auf die vertikale Anordnung und Erstreckung der Formelemente (46, 48) vorgesehen ist, dass
a) in Bezug zu dem vertikalen Rand (44) des Türflügels (40) ein erstes Formelement (46) und in Bezug zu dem ersten vertikalen Holm (52) des Türportals (50) ein zweites Formelement (48) jeweils etwa mittig angeordnet sind, oder dass
b) in Bezug zu dem vertikalen Rand (44) des Türflügels (40) das erste Formelement (46) und in Bezug zu dem ersten vertikalen Holm (52) des Türportals (50) das zweite Formelement (48) jeweils entlang der gesamten vertikalen Erstreckung des vertikalen Rands (44) des Türflügels (40) und des ersten vertikalen Holms (52) des Türportals (50) angeordnet sind, oder dass
c) in Bezug zu dem vertikalen Rand (44) des Türflügels (40) mehrere erste Formelemente (46) und in Bezug zu dem ersten vertikalen Holm (52) des Türportals (50) mehrere zweite Formelemente (48) jeweils mit Vertikalabstand zueinander angeordnet sind.

7. Türmodul nach einem der vorhergehenden Ansprüche, **dadurch gekennzeichnet, dass** der Türflügel (40) gegenüber dem Türportal (50) eine kombinierte Ausstell-Verschiebebewegung oder lediglich eine lineare Verschiebebewegung ausführt.

8. Türmodul nach einem der vorhergehenden Ansprüche, **dadurch gekennzeichnet, dass** es zwei Türflügel (40) aufweist, wobei an den beiden vertikalen Holmen (52, 54) des Türportals (50) sowie an den gegenüber liegenden vertikalen Rändern beider Türflügel jeweils erste und zweite Formelemente (46, 48) angeordnet sind sowie je einer Paarung eines vertikalen Randes (44) eines Türflügels (40) und eines vertikal angeordneten Holmes (52, 54) des Türportals (50) wenigstens ein elastisch verformbares Dichtungselement (60) zugeordnet ist.

9. Wagenkasten für ein Fahrzeug, insbesondere für ein Schienenfahrzeug, mit wenigstens einer Wand (2) mit einer Türöffnung (42), in welcher ein Türmodul (30) nach einem der vorhergehenden Ansprüche angeordnet ist.

10. Fahrzeug (1), mit wenigstens einem Wagenkasten nach Anspruch 9.

11. Fahrzeug nach Anspruch 10, **dadurch gekennzeichnet, dass** es ein Schienenfahrzeug ist.

## Claims

1. Door module (30) for arrangement in a doorway (42) in a wall (2) of a carriage body of a vehicle (1), having
a) at least one door leaf (40),
b) a portal (50) which includes two vertically arranged struts (52, 54) and two horizontally arranged struts (56, 58), wherein the door leaf (40) can be moved relative to the portal (50) between an open position and a closed position, and
c) at least one elastically deformable sealing element (60), which seals in the closed position at least one vertical edge (44) of the door leaf (40) in relation to a first vertically arranged strut (52) of the portal (50), and having
d) an electronic door controller which is provided for latching / unlatching or locking / releasing the door leaf (40) in relation to the portal (50), wherein
e) at least one first shaped element (46) arranged on the vertical edge (44) of the door leaf (40) and at least one second shaped element (48) arranged on the first vertical strut (52) of the portal (50) are provided, wherein
f) the at least one elastically deformable sealing element (60) is formed separately from the first shaped element (46) and the second shaped element (48),
**characterised in that**
g) the first shaped element (46) and the second shaped element (48) engage automatically one inside the other in such a way that an indirect form fit is automatically produced between the first shaped element (46) and the second shaped element (48) in a direction perpendicular to the plane of the door leaf (40) only in the closed position of the door leaf (40), but such an indirect form fit is automatically removed if the at least one door leaf (40) is in any position other than the closed position, wherein
h) the automatic production and removal of the indirect form fit is realised exclusively mechanically and is controlled by the movement of the door leaf (40) in the closing or opening direction and is separate and independent from the electronic door control, wherein
i) the first shaped element (46) or the second shaped element (48) carries the at least one elastically deformable sealing element (60) in such a way that when the indirect form fit is produced in the closed position the at least one elastically deformable sealing element (60) forms a constituent part of the indirect form fit **in that**
- the elastically deformable sealing element (60) carried by the first shaped element (46) and the second shaped element (48) engage in a form-fitting manner one inside the other, or
- the elastically deformable sealing element (60) carried by the second shaped element (48) and the first shaped element (46) engage in a form-fitting manner one inside the other, and wherein
j) first and second wedge faces designed to complement each other are arranged on the first shaped element (46) and on the second shaped element (48) in such a way that the effect of the indirect form fit and / or the sealing effect increase(s) when the door leaf (40) moves from a position in which the door leaf (40) has not yet fully reached the closed position towards the final closed position.

2. Door module according to one of the preceding claims, **characterised in that**
a) the first shaped element (46) is arranged on a door face of the door leaf (40) that points inwards in relation to the carriage body and the second shaped element (48) is arranged on a strut face of the first vertical strut (52) of the portal (50) that points outwards in relation to the carriage body, or
b) the first shaped element (46) is arranged on a door face of the door leaf (40) that points outwards in relation to the carriage body and the second shaped element (48) is arranged on a strut face of the first vertical strut (52) of the portal (50) that points inwards in relation to the carriage body.

3. Door module according to one of the preceding claims, **characterised in that** the at least one elastically deformable sealing element (60) has an encased hollow region (34).

4. Door module according to one of the preceding claims, **characterised in that** the first shaped element (46) and the second shaped element (48) and / or the at least one elastically deformable sealing element (60) are arranged coplanarly in relation to the plane of the door leaf (40).

5. Door module according to one of claims 1 to 3, **characterised in that** the first shaped element (46) and the second shaped element (48) and / or the at least one elastically deformable sealing element (60) are arranged offset outwardly or inwardly in relation to the plane of the door leaf (40).

6. Door module according to one of the preceding claims, **characterised in that** in relation to the vertical arrangement and extension of the shaped elements (46, 48) it is provided that
a) in relation to the vertical edge (44) of the door leaf (40) a first shaped element (46) is centrally arranged and in relation to the first vertical strut (52) of the portal (50) a second shaped element (48) is centrally arranged, or
b) in relation to the vertical edge (44) of the door leaf (40) the first shaped element (46) is arranged and in relation to the first vertical strut (52) of the portal (50) the second shaped element (48) is arranged in each case along the whole vertical extension of the vertical edge (44) of the door leaf (40) and the first vertical strut (52) of the portal (50), or
c) in relation to the vertical edge (44) of the door leaf (40) a plurality of first shaped elements (46) and in relation to the first vertical strut (52) of the portal (50) a plurality of second shaped elements (48) are arranged at a vertical distance from each another in each case.

7. Door module according to one of the preceding claims, **characterised in that** the door leaf (40) performs a combined opening / displacement movement or only a linear displacement movement in relation to the portal (50).

8. Door module according to one of the preceding claims, **characterised in that** it has two door leaves (40), wherein disposed on both vertical struts (52, 54) of the portal (50) and also on the opposite-lying vertical edges of both door leaves are first and second shaped elements (46, 48), and at least one elastically deformable sealing element (60) is assigned to each pair of a vertical edge (44) of a door leaf (40) and a vertically arranged strut (52, 54) of the portal (50).

9. Carriage body for a vehicle, in particular for a railway vehicle, having at least one wall (2) with a doorway (42), in which a door module (30) according to one of the preceding claims is arranged.

10. Vehicle (1), having at least one carriage body according to claim 9.

11. Vehicle according to claim 10, **characterised in that** it is a railway vehicle.

## Revendications

1. Module (30) de porte à monter dans une ouverture (42) de porte d'une paroi (2) d'une caisse d'un véhicule (1), comprenant
a) un ventail (40) de porte,
b) un portique (50) de porte, qui comprend deux longerons (52, 54) disposés verticalement et deux longerons (56, 58) disposés horizontalement, le ventail (40) de porte étant mobile par rapport au portique (50) de porte entre une position ouverte et une position fermée, et
c) au moins un élément (60) d'étanchéité déformable élastiquement, qui dans la position fermée, applique de manière étanche au moins un bord (44) vertical du ventail (40) de la porte étanche sur un premier longeron (52) disposé verticalement du portique (50) de la porte, et comprenant
d) une commande électronique de porte, qui est prévue pour le verrouillage/déverrouillage ou le blocage/libération du ventail (40) de la porte par rapport au portique (50) de la porte, dans lequel
e) il est prévu au moins un premier élément (46) de forme disposé sur le bord (44) vertical du ventail (40) de la porte et au moins un deuxième élément (48) de forme disposé sur le premier longeron (52) vertical du portique (50) de la porte, dans lequel
f) le au moins un élément (60) d'étanchéité déformable élastiquement est constitué distinctement du premier élément (46) de forme et du deuxième élément (48) de forme, **caractérisé en ce que**
g) seulement dans la position de fermeture du ventail (40) de la porte, le premier élément (46) de forme et le deuxième élément (48) de forme s'interpénètrent automatiquement de manière à donner entre le premier élément (46) de forme et le deuxième élément (48) de forme, considéré dans une direction perpendiculaire au plan du ventail (40) de la porte, automatiquement une complémentarité de forme indirecte, mais à lever automatiquement une telle complémentarité de forme indirecte dans une position, s'écartant de la position fermée, du au moins un ventail (40) de porte, dans lequel
h) la réalisation et la levée automatiques de la complémentarité de forme indirecte s'effectuent exclusivement mécaniquement et sont commandées par le déplacement du ventail (40) de la porte dans la direction de fermeture ou d'ouverture et sont distinctes et indépendantes de la commande électronique de porte, dans lequel
i) le premier élément (46) de forme ou le deuxième élément (48) de forme porte le au moins un élément (60) d'étanchéité déformable élastiquement de manière à ce qu'à la réalisation de la complémentarité de forme indirecte dans la position fermée, le au moins un élément (60) d'étanchéité déformable élastiquement constitue une partie constitutive de la complémentarité de forme indirecte par le fait que
- le premier élément (60) d'étanchéité déformable élastiquement porté par le premier élément (46) de forme et le deuxième élément (48) de forme s'interpénètrent à complémentarité de forme, ou
- l'élément (60) d'étanchéité déformable élastiquement porté par le deuxième élément (48) de forme et le premier élément (46) de forme s'interpénètrent élastiquement, et dans lequel
j) des première et deuxième surfaces cunéiformes, constituées de manière complémentaire, sont disposées sur le premier élément (46) de forme et sur le deuxième élément (48) de forme de manière à ce que l'effet de la complémentarité de forme indirecte et/ou l'effet d'étanchéité augmente, lors d'un déplacement du ventail (40) de la porte en partant d'une position du ventail (40) de la porte, dans laquelle celui-ci n'a pas pris encore entièrement la position fermée, en direction d'un état final de la position fermée.

2. Module de porte suivant l'une des revendications précédentes, **caractérisé en ce que**
a) le premier élément (46) de forme est disposé sur une surface de porte, tournée vers l'intérieur par rapport à la caisse, du ventail (40) de la porte et le deuxième élément (48) de forme est disposé sur une surface de longeron, tourné vers l'extérieur par rapport à la caisse, du premier longeron (52) vertical du portique (50) de la porte, ou **en ce que**
b) le premier élément (46) de forme est disposé sur une surface de porte, tournée vers l'extérieur par rapport à la caisse, du ventail (40) de la porte et le deuxième élément (48) de forme est disposé sur une surface de longeron, tournée vers l'intérieur par rapport à la caisse, du premier longeron (52) vertical du portique (50) de la porte.

3. Module de porte suivant l'une des revendications précédentes, **caractérisé en ce que** le au moins un élément (60) d'étanchéité déformable élastiquement a une partie (34) creuse non enveloppée.

4. Module de porte suivant l'une des revendications précédentes, **caractérisé en ce que** le premier élément (46) de forme et le deuxième élément (48) de forme et/ou le au moins un élément (60) d'étanchéité déformable élastiquement sont disposés de manière coplanaire par rapport au plan du ventail (40) de la porte.

5. Module de porte suivant l'une des revendications 1 à 3, **caractérisé en ce que** le premier élément (46) de forme et le deuxième élément (48) et/ou **en ce que** le au moins un élément (60) d'étanchéité déformable élastiquement sont disposés de manière décalée vers l'extérieur ou l'intérieur par rapport au plan du ventail (40) de la porte.

6. Module de porte suivant l'une des revendications précédentes, **caractérisé en ce que** par rapport à l'agencement vertical et l'étendue des éléments (46, 48) de forme, il est prévu que
a) par rapport au bord (44) vertical du ventail (40) de la porte, un premier élément (46) de forme et par rapport au premier longeron (52) vertical du portique (50) de la porte un deuxième élément (48) de forme sont disposés respectivement à peu près au milieu, ou **en ce que**
b) par rapport au bord (44) vertical du ventail (40) de la porte, le premier élément (46) de forme et par rapport au premier longeron (52) vertical du portique (50) de la porte le deuxième élément (48) de forme sont disposés respectivement le long de toute l'étendue verticale du bord (44) vertical du ventail (40) de la porte et du longeron (52) vertical du portique (50) de la porte, ou **en ce que**
c) par rapport au bord (44) vertical du ventail (40) de la porte, plusieurs premiers éléments (46) de forme et par rapport au premier longeron (52) vertical du portique (50) de la porte plusieurs deuxièmes éléments (48) de forme sont disposés respectivement en étant à distance verticale entre eux.

7. Module de porte suivant l'une des revendications précédentes, **caractérisé en ce que** le ventail (40) du portique (50) de la porte exécute un mouvement combiné d'orientation-coulissement ou simplement un mouvement de coulissement linéaire.

8. Module de porte suivant l'une des revendications précédentes, **caractérisé en ce qu'**il a deux ventaux (40) de porte, dans lequel sur les deux longerons (52, 54) du portique (50) de la porte, ainsi que sur les bords verticaux opposés des deux ventaux de la porte sont disposés respectivement des premier et deuxième éléments (46, 48) de forme, ainsi qu'est associé respectivement à une paire d'un bord (44) vertical d'un ventail (40) de la porte et d'un longeron (52, 54) disposé verticalement du portique (50) de la porte au moins un élément (60) d'étanchéité déformable élastiquement.

9. Caisse d'un véhicule, notamment d'un véhicule ferroviaire, comprenant une paroi (2) ayant une ouverture (42) de porte dans laquelle est disposé un module (30) de porte suivant l'une des revendications précédentes.

10. Véhicule (1), ayant au moins une caisse suivant la revendication 9.

11. Véhicule suivant la revendication 10, **caractérisé en ce que** c'est un véhicule ferroviaire.
